(19) Europäisches Patentamt
European Patent Office
Office européen des brevets

(11) Veröffentlichungsnummer: **0 149 813 B1**

(12) # EUROPÄISCHE PATENTSCHRIFT

(45) Veröffentlichungstag der Patentschrift: **26.06.91**

(51) Int. Cl.$^5$: **C08L 101/00**

(21) Anmeldenummer: **84115717.5**

(22) Anmeldetag: **18.12.84**

(54) **Halogenfreie, flammgeschützte thermoplastische Formmasse.**

(30) Priorität: **20.01.84 DE 3401835**

(43) Veröffentlichungstag der Anmeldung:
**31.07.85 Patentblatt 85/31**

(45) Bekanntmachung des Hinweises auf die Patenterteilung:
**26.06.91 Patentblatt 91/26**

(84) Benannte Vertragsstaaten:
**BE DE FR GB NL**

(56) Entgegenhaltungen:
**EP-A- 0 023 353**
**DE-A- 2 254 203**

(73) Patentinhaber: **BASF Aktiengesellschaft**
**Carl-Bosch-Strasse 38**
**W-6700 Ludwigshafen(DE)**

(72) Erfinder: **Muench, Volker, Dr.**
**Luitpoldstrasse 114**
**W-6700 Ludwigshafen(DE)**
Erfinder: **Hambrecht, Juergen, Dr.**
**Werderstrasse 30**
**W-6900 Heidelberg(DE)**
Erfinder: **Echte, Adolf, Dr.**
**Leuschnerstrasse 42**
**W-6700 Ludwigshafen(DE)**
Erfinder: **Illers, Karl Heinz, Dr.**
**Huttenstrasse 20**
**W-6701 Otterstadt(DE)**
Erfinder: **Swoboda, Johann, Dr.**
**Neuwiesenstrasse 28**
**W-6700 Ludwigshafen(DE)**

**EP 0 149 813 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine halogenfreie, flammgeschützte thermoplastische Fcrmmasse, die aus einem halogenfreien thermoplastischen Harz aus der Gruppe der Styrol- oder α-Methylstyrolpolymeren und halogenfreien flammfestmachenden Komponenten aufgebaut ist.

Zum Stand der Technik verweisen wir auf folgende Standardwerke der Literatur über Flammfestausrüstung von Thermoplasten:

(1) Vogel, "Flammfestmachen von Kunststoffen", Hüthig-Verlag, Heidelberg (1966), Seiten 94 bis 102,

(2) Troitzsch, "Brandverhalten von Kunststoffen", Hanser-Verlag, München (1982), Seiten 1 bis 65,

(3) Hirschler, in "Developments in Polymer Stabilization", Band 5, Editor G. Scott, Applied Science Publishers, London (1982), Seiten 107 bis 151.

Die Flammfestausrüstung von thermoplastischen Kunststoffen ist aus (1), (2) und (3) bekannt. Man weiß auch, daß bei Anwendung verhältnismäßig großer Mengen an Halogen enthaltenden Flammschutzmitteln und unter gleichzeitiger Anwendung von Synergisten, wie Verbindungen des Phosphors, Arsens, Antimons, Wismuts, Bors oder des Zinns Thermoplaste nach dem Beflammen mit einer heißen Flamme nichtbrennend abtropfen und von selbst verlöschen. Ferner ist bekannt, daß dieser Effekt des Selbstverlöschens ohne die Anwendung eines Synergisten erst nach Zugabe einer weitaus größeren Menge an Halogen enthaltenden Flammschutzmitteln eintritt.

Außer der oben angeführten Möglichkeit, thermoplastische Kunststoffe mit Halogen enthaltenden Flammschutzmitteln auszurüsten, gibt es auch die Möglichkeit eines halogenfreien Flammschutzes. So können beispielsweise Mischungen aus Poly(2,6-dimethyl-1,4-phenylen)ether (PPE) und schlagzähmodfiziertem Polystyrol (HIPS) durch Phosphor enthaltende organische Verbindungen flammfest ausgerüstet werden. Bezogen auf HIPS werden 50 bis 60 Gew.% von PPE + Phosphorverbindungen zugesetzt (vgl. z.B. DE-OS 3 019 617, 3 002 792). Ferner ist bekannt, daß Styrolpolymerisate mit recht hohen Mengen (40 bis 50 Gew.%) an $Mg(OH)_2$ (vgl, EP-PS 52 868), Polyguanaminen (vgl. DE-OS 2 837 378) oder Phosphinsäuren-Melaminaddukten/Dicyandiamid/roter Phosphor-Systemen (vgl. DE-OS 2 827 867) oder Novolak/roter Phosphor-Systemen (vgl. E.N. Peters, A.B. Furtek, D.I. Steinbert und D.T. Kwiatkowski, Journal of Fire Retardant Chemistry, Band 7, Seiten 69 bis 71 (1980)) flammfest ausgerüstet werden können. Des weiteren ist bekannt, daß Styrolpolymerisate mit intumeszierenden Flammschutzmittelsystemen, wie Poly(ammoniumphosphat) und einem Harz auf der Basis von Tris(2-hydroxyethyl)isocyanurat (vgl. EP-PS 26 391 und 45 835), oder von 2,6,7-Trioxa-1-phosphabicyclo[2.2.2]-octan-4-methanol-1-oxid/-Melamin (vgl. EP-PS 69 500), oder von Bis(2-hydroxyethyl)phosphat/Melamin/Dipentaerythrit (vgl. US-PS 4 247 435) und mit Melammoniumpentaerythritdiphosphat (vgl. GB-PS 2 028 822) ausgerüstet werden können. In der zit. GB-PS 2 028 822 wird allerdings schon darauf hingewiesen, daß die Wirkung der bekannten Systeme in Styrolpolymerisaten nur mäßig ist. Schließlich werden Phenol/Formaldehyd-Harze in der DE-OS 3 025 139 als wenig wirksam bei der Flammfestmachung von Thermoplasten beschrieben.

Die Anwendung von halogenfreien Flammschutzmitteln, wie dies vorstehend aufgezeigt wurde, bringt, wie sich in umfangreichen Versuchsreihen gezeigt hat, bisher keine durchschlagende Verbesserung. So werden zur Ausrüstung zahlreicher Thermoplaste große Mengen an Flammschutzmitteln benötigt. Oder aber ein Flammschutzmittelsystem wirkt in bestimmten Thermoplasten, in anderen dagegen überhaupt nicht. Ferner bewirken bestimmte Komponenten dieser Systeme eine zu starke Erhöhung der Fließfähigkeit und eine drastische Erniedrigung der Wärmeformbeständigkeit. Fast alle halogenfreien Flammschutzmittelsysteme sind mit den auszurüstenden Thermoplasten völlig unverträglich und führen zur Verschlechterung der mechanischen Eigenschaften, und zumeist tropfen die halogenfrei flammfest ausgerüsteten Formmassen beim Beflammen ab.

Es bestand daher die Aufgabe, ein halogenfreies Flammschutzsystem zu entwickeln, bei dem die vorstehend genannten Nachteile nicht auftraten. Dieses halogenfreie Flammschutzmittelsystem sollte außerdem auch in solchen Thermoplasten, welche sich bisher nur sehr schwer oder gar nicht halogenfrei flammfest ausrüsten ließen, das Erreichen der Einstufungen UL 94 V 1 und UL 94 VO bewirken.

Zusätzlich sollte das halogenfreie Flammschutzmittelsystem das brennende und auch das nichtbrennende Abtropfen beflammter Formmassen verhindern.

Die Aufgabe wird gelöst durch eine halogenfreie, flammgeschützte, thermoplastische Formmasse aus einem halogenfreien thermoplastischen Harz (A) aus der Gruppe, die Polystyrol, Copolymerisate von Styrol oder α-Methylstyrol mit insbesondere Acrylnitril und entsprechende, mit Kautschuk schlagzäh modifizierte Polymere umfaßt. Das thermoplastische Harz (A) ist in einem Anteil von mindestens 30 Gew.%, bezogen auf eine Formmasse aus A + B + C + D, zugegen; die Formmasse enthält als weitere Komponente
1 bis 50 Gew.%, bezogen auf die Formmasse, mindestens eines Phenol/Aldehyd-Harzes (B),
1 bis 50 Gew.%, bezogen auf die Formmasse, mindestens einer Stickstoff enthaltenden organischen

Verbindung (C), ausgewählt aus der Gruppe, die umfaßt Triazine, Triazolidine, Harnstoffe, Guanidine, Guanamine, Aminosäuren und Peptide sowie deren Salze und deren Derivate, und
3 bis 50 Gew.%, bezogen auf die Formmasse, mindestens einer Phosphor enthaltenden organischen Verbindung (D).

Am Aufbau der Formmasse sind die Komponenten A bis D beteiligt, wobei die Summe der Gewichtsanteile dieser 4 Komponenten jeweils 100 beträgt. Jede der Komponenten A bis D ist an sich bekannt. Neu und erfinderisch ist der Vorschlag, die Komponenten B + C + D als intumeszierendes System in Verbindung mit dem thermoplastischen Harz (A) anzuwenden, um zu halogenfreien, flammgeschützten Formmassen zu gelangen.

Die erfindungsgemäße Formmasse besteht zu

1. 5 bis 95 Gew.%, vorzugsweise **mindestens 30 Gew.% und insbesondere 65 bis 75 Gew.% der Komponente A**
2. 1 bis 50 Gew.%, vorzugsweise 5 bis 25 Gew.% und insbesondere 8 bis 12 Gew.% der Komponente B
3. 1 bis 50 Gew.%, vorzugsweise 5 bis 35 Gew.% und insbesondere 8 bis 12 Gew.% der Komponente C und
4. 3 bis 50 Gew.%, vorzugsweise 5 bis 35 Gew.% und insbesondere 8 bis 12 Gew.% der Komponente D.

Vorzugsweise werden von den das halogenfreie Flammschutzmittelsystem ausmachenden Komponenten B, C und D jeweils gleiche Mengen angewendet. Die Mengen der vorstehend genannten Komponenten A bis D beziehen sich jeweils auf die Formmasse aus A + B + C + D (= 100 %).

Komponente A

Die Komponente A der erfindungsgemäßen Formmasse stellt wenigstens ein halogenfreies thermoplastisches, handelsübliches, gegegebenenfalls schlagzäh modifiziertes Harz dar. Es können auch Mischungen verschiedener thermoplastischer Kunststoffe, die nachstehend aufgeführt sind, verwendet werden. Als thermoplastische Kunststoffe kommen in Betracht: Poly(styrol), Copolymerisate des Styrols mit Acrylnitril, mit Maleinsäureanhydrid, mit Maleinsäureestern und mit Acrylsäureestern, welche gegebenenfalls mit Kautschuk schlagzäh modifiziert sind. Ferner sind geeignet Copolymerisate des Acrylnitrils mit α-Methylstyrol, welche gegebenenfalls mit Kautschuk modifiziert sind.

Homopolymerisate $A_1$

Bevorzugt eingesetzt werden von den Homopolymerisaten Poly(styrole) ($A_1$), wobei der Styrolbestandteil zur Verbesserung der Wärmeformbeständigkeit ganz oder teilweise durch kernalkyliertes Styrol, z.B. p-Methylstyrol, ersetzt sein kann.

Copolymerisate $A_2$

Besonders bevorzugt eingesetzt werden Copolymerisate des Styrols mit Acrylnitril ($A_2$), Maleinsäureanhydrid, Maleinsäureestern und mit Acrylsäureestern.

Für die Herstellung der erfindungsgemäßen Formmasse werden von diesen Copolymerisaten ganz besonders bevorzugt Styrol/Acrylnitril-Copolymerisate ($A_2$) angewendet; diese bestehen aus 1 bis 50 Gew.% Acrylnitril ($a_2$) und 50 bis 99 Gew.% Styrol ($a_1$). Der Styrolbestandteil kann, um die Wärmeformbeständigkeit zu verbessern, ganz oder teilweise durch kernalkyliertes Styrol ersetzt sein. Styrol/Acrylnitril-Copolymerisate ($A_2$) sind im Handel erhältlich und können z.B. nach der Lehre der DE-AS 1 001 001 bzw. DE-PS 1 003 436 hergestellt werden. Der Molekulargewichtsbereich der Copolymerisate kann $M_w = 10^5$ bis $M_w = 2,5 . 10^5$ (Gewichtsmittel $M_w$ aus Lichtstreuung) betragen.

Das zur Schlagzähmodifizierung der Komponente A der erfindungsgemäßen Formmasse eingesetzte Elastomer kann ein ungepfropfter Kautschuk ($a_3$) oder ein gepfropfter Kautschuk ($a_4$) sein.

Der Kautschuk ($a_3$) soll eine Glastemperatur (nach K.H. Illers und H. Breuer, Kolloid-Zeitschrift 176, (1961) Seite 110) haben die unter 0 °C liegt. Als Kautschuk kommen beispielsweise in Frage: Polybutadien (vgl. DE-OS 1 420 775 und DE-OS 1 495 089). Copolymerisate aus Butadien und Styrol (vgl. Brit. Patent 649 166), Copolymerisate aus Butadien und Styrol, Polyacrylester, die gegebenenfalls vernetzt sein können (vgl. DE-OS 1 138 921, DE-AS 1 224 486 oder DE-AS 1 260 135), sowie Copolymerisate aus Acrylsäureester und Butadien (vgl. DE-AS 1 238 207), ferner Elastomere von Copolymerisaten aus Acrylsäureestern mit Styrol, Acrylnitril und Vinylethern und Copolymerisate aus Ethylen und einem nicht konjugierten Dien (EPDM-Kautschuke).

Zur Schlagzähmodifizierung von Homopolymerisaten (HIPS) wird besonders bevorzugt Polybutadien ($a_3$) eingesetzt, und zwar in Mengen von 2 bis 20 Gew.%, vorzugsweise aber in Mengen von 3 bis 10 Gew.%, bezogen auf die Komponente $A_1$.

Zur Herstellung von insbesondere schlagzähen Copolymerisaten $A_2$ benötigt man gepfropfte Kautschuke, bevorzugt auf Basis von Polybutadien ($a_4$). Als solche kommen in Frage Pfropfmischpolymerisate, welche in Anteilen von 5 bis 50 Gew.%, insbesondere von 10 bis 45 Gew.%, jeweils bezogen auf die Komponente $A_2$ angewendet werden.

Diese Pfropfmischpolymerisate sind aufgebaut aus 10 bis 50 Gew.%, vorzugsweise 15 bis 45 Gew.% eines Gemisches aus mindestens einem vinylaromatischen Monomeren ($a_1$), das bis zu 12 Kohlenstoffatome enthält, und 0,1 bis 25 Gew.%, vorzugsweise 5 bis 20 Gew.% mindestens eines (Meth)acrylsäureesters und/oder von Acrylnitril ($a_2$) als Pfropfhülle, auf 50 bis 90 Gew.%, insbesondere 50 bis 75 Gew.% einer elastomeren Pfropfgrundlage [Kautschukkomponente ($a_3$)], die gegebenenfalls vernetzt sein kann. Die vinylaromatischen Pfropfmonomeren ($a_1$) sind Styrol,$\alpha$-Methylstyrol und/oder kernalkyliertes Styrole mit bis zu 12 C-Atomen; als Monomere ($a_2$) kommen (Meth)acrylsäureester von Alkanolen mit bis zu 8 C-Atomen, sowie Acrylnitril oder Mischungen davon in Betracht.

Die Herstellung der Pfropfmischpolymerisate ($a_4$) ist an sich bekannt. Sie können z.B. hergestellt werden durch Polymerisation eines Gemisches von Styrol und Acrylnitril und/oder (Meth)acrylaten in Gegenwart eines Kautschuks.

Als Pfropfkautschuke ($A_4$) kommen somit in Frage:

$a_{4a}$ : 75 % Polybutadienkautschuk, gepfropft mit 25 % Styrol/Acrylnitril im Verhältnis (90/10)
$a_{4b}$ : 75 % Polybutadienkautschuk, gepfropft mit 25 % Styrol/Acrylnitril im Verhältnis (83/17)
$a_{4c}$ : 75 % Polybutadienkautschuk, gepfropft mit 25 % Styrol/Acrylnitril im Verhältnis (75/25)
$a_{4d}$ : 75 % Polybutadienkautschuk, gepfropft mit 25 % Styrol/Acrylnitril im Verhältnis (70/30)
$a_{4e}$ : 75 % eines Kautschuks aus 60 Teilen Acrylsäurebutylester und 40 Teilen Butadien, gepfropft mit 25 % Styrol/Acrylnitril im Verhältnis (70/30)
$a_{4f}$ : 75 % Polybutadienkautschuk, gepfropft mit 25 % Styrol/Acrylnitril im Verhältnis (70/30)
$a_{4g}$ : 60 % Polybutadienkautschuk, gepfropft mit 40 % Styrol/Acrylnitril im Verhältnis (65/35)
$a_{4h}$ : 60 % Kautschuk, bestehend aus Butylacrylat und Dicyclopentadienylacrylat im Verhältnis (98/2), gepfropft mit 40 % Styrol/Acrylnitril im Verhältnis (75/25)
$a_{4i}$ : 75 % Kautschuk, bestehend aus Butylacrylat, 1,3-Butadien und Vinylmethylether im Verhältnis (57/38,4/4,5), gepfropft mit 25 % Styrol/Acrylnitril im Verhältnis (70/30).

Beonders bevorzugt eingesetzt wird ($a_{4g}$).

In den erfindungsgemäßen Formmassen besonders bevorzugt eingesetzte Mischungen aus Komponente $A_1$ oder $A_2$ und Kautschuken $a_3$ oder $a_4$ sind dem-nach schlagzäh modifiziertes Poly(styrol) ($A_3$), schlagzäh modifizierte Stryrol/Acrylnitril-Copolymerisate ($A_4$) und Acrylnitril-Butadien-Scyrol-Pfropfcopolymerisate (ABS) ($A_5$).

## Komponente B

Bei der Komponente B der erfindungsgemäßen Formmasse handelt es sich um Phenol/Aldehyd-Harze, welche bekanntermaßen durch die Kondensation von Phenolen und Aldehyden hergestellt werden können. Besonders bevorzugt eingesetzt werden Novolake mit zahlenmittleren Molgewichten $M_n$ von 500 bis 2000.

Ihre Darstellung wird beispielsweise in Houben-Weyl, "Methoden der organischen Chemie", Band 14, Teilband 2, Georg Thieme Verlag, Stuttgart, 1963, Seite 201 ff oder in Sørensen und Campbell, "Preparative Methods of Polymer Chemistry", Interscience Publishers, New York, 1968 und thermodynamische Eigenschaften von Novolak/Polymermischungen von Fahrenholtz und Kwei in Macromolecules, Band 14, Seiten 1076 bis 1079 (1981), beschrieben.

Zur Darstellung von Novolaken eignen sich Aldehyde ($b_1$) der allgemeinen Formel (I)

$R^1$-CHO (1),

worin $R^1$ = H, $C_1$-$C_{10}$-Alkyl, Cycloalkyl, oder $C_6$-$C_{12}$-Aryl- oder w-Aryl-$C_1$--$C_3$-Alkyl. Genannt seien beispielsweise Formaldehyd, Acetaldehyd, n-Propanal, n-Butanal, i-Propanal, i-Butylaldehyd, 3-Methyl-n-butanal, Benzaldehyd, p-Tolylaldehyd, 2-Phenylacetaldehyd, u.a. ist auch die Verwendung von Furfurylaldehyd denkbar. Besonders bevorzugt eingesetzt wird Formaldehyd.

Geeignet sind Phenole ($b_2$) der allgemeinen Formel (II)

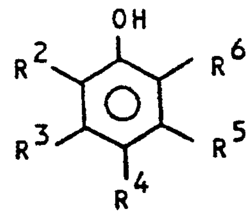

(II)

worin
$R^2$ und $R^6$ Wasserstoffatome bezeichnen und $R^3$, $R^4$ und $R^5$ wahlweise gleich Wasserstoff- oder $C_1$-$C_{20}$-Alkyl-, Cycloalkyl-, $C_6$-$C_{10}$-Aryl-, $C_1$-$C_6$-Alkoxi-, Cycloalkoxi-, $C_6$-$C_{10}$-Phenoxi-, Hydroxi-, Carbonyl-, Carboxi-, Cyano-, $C_1$-$C_6$-Alkylester-, $C_6$-$C_{10}$-Arylester-, Sulfonsäure-, Sulfonsäureamid-, $C_1$-$C_6$-Sulfonsäurealkylester-, $C_6$-$C_{10}$-Sulfonsäureester-, $C_1$-$C_6$-Alkyl-oder $C_6$-$C_{10}$-Arylphosphinsäure- und ihren $C_1$-$C_6$-Alkyl- oder $C_6$-$C_{10}$-Arylestern, Phosphonsäure- und Ihren Mono- und Di-$C_1$-$C_6$-Alkyl- oder $C_6$-$C_{10}$-Arylestern, 0-Phosphorsäure- und ihren Mono- und Di-$C_1$-$C_6$-Alkyl- oder -$C_6$-$C_{10}$-Arylestern, -Aryl-$C_1$-$C_6$-Alkyl- sein können, oder worin $R^2$ und $R^4$ Wasserstoffatome bezeichnen und $R^3$, $R^5$ und $R^6$ gleich den oben genannten Resten sein können.

Charakteristische Beispiele für ($b_2$) sind, ohne damit eine Einschränkung zu treffen, Phenol, o-Kresol, m-Kresol, p-Kresol, 2,5-Dimethyl-, 3,5-Dimethyl-, 2,3,5-Trimethyl-, 3,4,5-Trimethyl-, p-t-Butyl-, p-n-Octyl-, p-Stearyl-, p-Phenyl-, p-(2-Phenylethyl)-, o-Isopropyl-, p-Isopropyl-, m-Isopropyl-, p-Methoxi- und p-Phenoxiphenol, Brenzkatechin, Resorcin, Hydrochinon, Salicylaldehyd, Salicylsäure, p-Hydrobenzoesäure, p-Hydroxibenzoesäure, p-Hydroxibenzoesäuremethylester, p-Cyano- und o-Cyanophenol, p-Hydroxibenzolsulfonsäure, -sulfonsäureamid und -sulfonsäurecyclohexylester, 4-Hydroxiphenylphenylphosphinsäure und -phenylphosphineäuremethylester-4-Hydroxiphenylphosphonsäure, -phosphonsäureethylester und -phosphonsäurediphenylester sowie zahlreiche andere Phenole. Bevorzugt eingesetzt werden Phenol, o-Kresol, m-Kresol, p-Kresol, p-t-Butylphenol und o-t-Butylphenol und p-Octylphenol.

Es können aber auch Gemische aus diesen Phenolen eingesetzt werden.

Bevorzugt eingesetzte Novolake (B) sind demnach, ohne damit eine Einschränkung zu treffen:

$B_1$ : Phenol/Formaldehyd-Novolak,
$B_2$ : o-Kresol/Formaldehyd-Novolak,
$B_3$ : m-Kresol/Formaldehyd-Novolak,
$B_4$ : t-Butylphenol/Formaldehyd-Novolak,
$B_5$ : p-Octylphenol/Formaldehyd-Novolak,
$B_6$ : p-Cyanophenol/Formaldehyd-Novolak.

Besonders bevorzugt eingesetzt wird $B_5$.

Beispiele für bevorzugt eingesetzte Novolake aus Gemischen von Phenolen ($b_2$) sind in der Tabelle 1 aufgeführt. Diese Aufzählung soll keine Einschränkung beinhalten.

Die Zusammensetzung der Mischungen der Phenole ist nicht kristisch und kann innerhalb der angegebenen Grenzen variieren. Es gilt für die Berechnung einer Zusammensetzung:

$\Sigma$Mol.% = 100

Tabelle 1: Beispiele für bevorzugt eingesetzte Phenolgemische

| Bezeichnung | Nebenkomponenten Hauptkomponente | o-Kresol (Mol.%) | m-Kresol (Mol.%) | p-Kresol (Mol.%) | p-t-Butylphenol (Mol.%) | o-t-Butylphenol (Mol.%) |
|---|---|---|---|---|---|---|
| $B_7$ | Phenol | (10-40) | - | - | (2-15) | - |
| $B_8$ | Phenol | (10-20) | (30-40) | - | - | (5-10) |
| $B_9$ | Phenol | (10-40) | (15-20) | - | (2-10) | (1-3) |
| $B_{10}$ | o-Kresol | - | (35-45) | - | - | - |
| $B_{11}$ | o-Kresol | - | ( 5-30) | - | (5-30) | - |
| $B_{12}$ | o-Kresol | - | - | - | - | (5-40) |
| $B_{13}$ | o-Kresol | - | (15-20) | - | (10-20) | - |
| $B_{14}$ | o-Kresol | - | (15-25) | - | (5-15) | (2-10) |
| $B_{15}$ | o-Kresol | - | ( 5-30) | (5-30) | - | - |

Bevorzugt eingesetzt werden ($B_{11}$) und ($B_{15}$). Ganz besonders bevorzugt eingesetzt werden in Formaldehyd-Novolak ($B_{11}$) und ($B_{15}$) der Zusammensetzung:
60 bis 70 Mol.% o-Kresol + 15 bis 20 Mol.% m-Kresol + 10 bis 20 Mol.% p-t-Butylphenol oder p-Kresol

Komponente C

Bei der Komponente C der erfindungsgemäßen Formmasse handelt es sich um eine Stickstoff enthaltende organische Verbindung aus der Gruppe der Triazine, Triazolidine, Harnstoffe, Guanidine, Guanamine, Aminosäuren und Peptide sowie den Salzen und deren Derivaten. Bevorzugt eingesetzt werden

Triazinderivate. Besonders bevorzugt wird Melamin ($C_1$).

Komponente D

Die Komponente D der erfindungsgemäßen Formmasse stellt eine Phosphor⁻ enthaltende organische Verbindung dar aus der Gruppe der Phosphate, Phenylneopentylphosphat, Pentaerythritdiphenyldiphosphat, Dicyclopentylhypodiphosphat, Ethylbrenzkatechinphosphat sowie der oligomeren Pentaerythritphosphite, -phosphate und -phosphonate gemäß EP-PS 8 486 der allgemeinen Formeln (111), (IV) und (V).

(III) 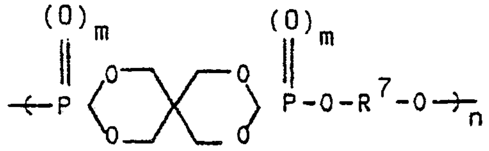 mit m = 0 oder 1

(IV) 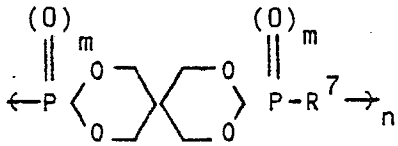 , mit m = 0 oder 1

(V) 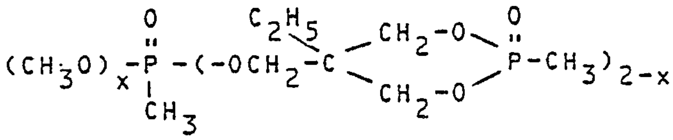

Mobil Antiblaze 19 (R)

worin $R^7$ = $-(CH_2-)_2$

$-(CH_2-)_3$

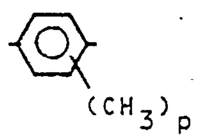 mit p = 0 bis 4,

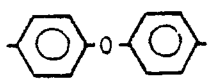

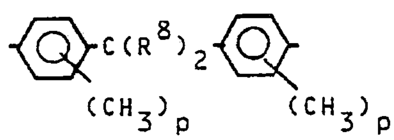 mit p = 0 bis 4 und $R^8$ = $C_1$- bis $C_4$-Alkyl oder H,

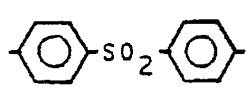

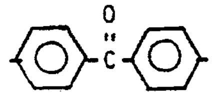

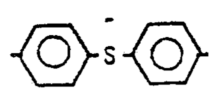

In allen vorstehenden Formeln kann n eine ganze Zahl von 2 bis 500, vorzugsweise aber von 10 bis 250 sein und x ist 0 oder 1.

Besonders bevorzugt eingesetzt werden Methyl-($D_1$) und Phenylneopentylphosphonat ($D_2$) sowie Pentaerythritdiphenyldiphosphat ($D_3$) und Antiblaze 19 ® von Mobil ($D_4$).

Komponente E

Die erfindungsgemäßen Formmassen können gegebenenfalls übliche Zusatzstoffe enthalten. Als Zusatzstoffe kommen bekannte und bewährte Stabilisatoren, wie sterisch gehinderte Phenole und organische Phosphite in Betracht, die in üblichen Mengen von jeweils 0,01 bis 0,5 Gew.%, bezogen auf die Formmasse aus A, B, C + D, eingesetzt werden. Ferner können Schwefel und/oder Schwefel enthaltende Stabilisatoren wie Dithiocarbamatkomplexe, Xantogensäuresalze, Thiazole und Zinksalze von Mercaptobenzimidazolen in üblichen Mengen von jeweils 0,01 bis 0,5 Gew.%, bezogen auf die Gesamtmischung eingesetzt werden.

Ferner sind anwendbar Füllstoffe, Farbpigmente, Gleitmittel, Weichmacher, Antistatika oder Treibmittel, weitere metallfreie Synergisten, wie Triphenylphosphat, Triphenylphosphinoxid in üblichen, dem Fachmann bekannten Mengen. Die Einarbeitung der erfindungsgemäßen flammhemmenden Masse sowie der eventuell verwendeten Zusatzstoffe kann nach einem geeigneten und bekannten Mischverfahren, z.B. in Extrudern, Knetern oder Walzen erfolgen.

Insbesondere können die Komponenten B, C und D der erfindungsgemäßen, flammhemmenden Masse getrennt in Form von Pulvern oder in Form einer pulverisierten Mischung oder als Konzentrat in dem (gewünschten) Thermoplasten (Komponente A) in einen weiteren Teil des Thermoplasten eingearbeitet werden, um die beabsichtigte Zusammensetzung zu erzielen.

Die erfindungsgemäßen Formmassen können durch Spritzgießen oder Strangpressen zu selbstverlöschenden Formkörpern oder Profilen verarbeitet werden.

Die erfindungsgemäßen Formmassen besitzen neben der Eigenschaft der Selbstverlöschung eine gute Wärmeformbeständigkeit und eine gute Fließfähigkeit und kein Abtropfen nach der Beflammung.

Die Formmasse zeichnet sich insbesondere dadurch aus, daß sich auch Styrol-(Co)Polymerisate und schlagzäh modifizierte Styrol-(Co)Polymerisate mit praktikablen Mengen halogenfrei flammfest ausrüsten lassen. Das Zustandekommen des flammhemmenden Effektes durch das System B + C + D bei den gesamten Thermoplasten ist überraschend, weil bekannte flammhemmende Systeme bei den genannten Thermoplasten keine Wirkung aufweisen und weil insbesondere die Einzelkomponenten B, C oder D der erfindungsgemäßen Formmasse selbst in den für die Praxis prohibitiv hohen Zuschlagsmengen keinerlei flammhemmende Wirkung zeigen.

Die in den Beispielen und Vergleichsversuchen erwähnten Brandtests wurden wie folgt durchgeführt:

Die Flammschutzprüfung erfolgt im vertikalen Brandtest nach den Vorschriften der Underwriter Laboratories zwecks Einordnung in eine der Brandklassen 94 V0, 94 V1 oder 94 V2.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 Sek. Zeitdauer mit einer offenen Flamme (Höhe 19 mm) nicht länger als 10 Sek. nachbrennen. Die Summe der Nachbrennzeiten bei 10 Beflammungen von 5 Proben darf nicht größer sein als 50 Sek. Es darf kein brennendes Abtropfen, vollständiges Abbrennen oder ein Nachglühen von länger als 30 Sek. erfolgen. Die Einstufung in die Brandklasse UL 94 V1 erfordert, daß die Nachbrennzeiten nicht länger als 30 Sek. sind und daß die Summe der Nachbrennzeiten von 10 Beflammungen von 5 Proben nicht größer als 250 Sek. ist. Das Nachglühen darf nie länger als 60 Sek. dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

Für die Durchführung von Versuchen wurden die nachstehend beschriebenen Stoffe hergestellt, bzw. verwendet.

Komponente A (am Schluß ist die in der Tabelle 2 gnannte Abkürzung angegeben z.B. für Produkt A1 = SAN-1)

1. Styrol-Acrylnitril-Copolymerisat (= SAN) mit 25 Gew.% Acrylnitril; Viskositätszahl VZ = 101 (alle VZ-Angaben beziehen sich auf Werte, die in 0,5 %iger Lösung in Dimethylformamid bei 25 °C gemessen wurden) = SAN-1;
2. SAN mit 35 % Acrylnitril; VZ = 104 = SAN-2;
3. SAN mit 35 % Acrylnitril; VZ = 80 = SAN-3;
4. Polybutadienkautschuk (60 %), gepfropft mit 40 % Styrol/Acrylnitril im Verhältnis (65/35) ($a_{4g}$) = PB 900;
5. Schlagzäh modifiziertes SAN-3 mit 45 % PB 900 = ABS-45;
6. Schlagzäh modifiziertes SAN-3 mit 20 % PB 900 = ABS-20;

Komponente B (Abkürzung in der Tabelle 2 in ( ), z.B. ($B_{11}$).
gemischter Novolak ($B_{11}$)

11,34 kg o-Kresol, 2,754 kg m-Kresol und 2,925 kg p-t-Butylphenol, 5,392 kg Formalin (37 %ig in Wasser), 314 g Oxalsäure x $2H_2O$ und 540 g $CH_3OH$ werden in 30 1 Wasser gemischt und 24 h bei 95 bis 97° C gerührt. Nach 24 h wird die obere, wäßrige Phase abgehebert und die untere Phase mit 10 1 Wasser gewaschen. Die untere, produkthaltige Phase wird abgelassen und die Lösungsmittel und ein Teil der leichtflüchtigen Phenole im Wasserstrahlvakuum abgezogen. Die verbleibende Schmelze wird bei 150° C und 0,2 bis 0,4 mbar von restlichem Phenol befreit. Die Schmelze wird auf einem Blech abgekühlt, zerkleinert und gemahlen.
Ausbeute: 10,3 kg
Analyse: C 80,0 %, H 4,7 %; 0 13,3 %;
Molgewicht (dampfdruckosmometrisch in Aceton): 700;
gemischter Novolak ($B_{15}$)

Der Novolak ($B_{15}$) wird nach analoger Vorschrift aus 63,18 kg p-Kresol, 82,62 kg m-Kresol, 340,2 kg o-Kresol und 320,4 kg Formalin (40 %ig in Wasser) unter Zusatz von 10 kg Oxalsäure und 35 kg $CH_3OH$ hergestellt.
Ausbeute: 400 kg;
Molgewicht (dampfdruckosmometrisch in Aceton): 1000;

Komponente C
Melamin ($C_1$) (Handelsprodukt.)

Komponente D

1. Methylneopentylphosphonat ($D_1$)
Zu einer Vorlage aus 104 8 (= 1 Mol) Neopentylglykol und 200 g (= 2,5 Mol) Pyridin in 500 ml Dioxan werden bei 30° C eine Lösung von 133 g (= 1 Mol) Methylphosphonsäuredichlorid in 100 ml Dioxan zugetropft. Anschließend wird 2 h am Rückfluß gekocht, abgekühlt, vom ausgefallenen Pyridiniumhydrochlorid abfiltriert und das Filtrat im Wasserstrahlvakuum erst bei 80° C dann bei 120° C eingedampft. Des Rohprodukt wird mit Diethylether gewaschen und aus Essigsäureethylether umkristallisiert.
2. Phenylneopentylphosphonat ($D_2$)
Die Verbindung wird analog zu Methylneopentylphosphonat aus 104 g (= 1 Mol) Neopentylglykol, 200 g (= 2,5 Mol) Pyridin und 145 g (= 1 Mol) Phenylpbosphonsäuredichlorid in Dioxan hergestellt. Von der obigen Darstellung abweichend wird das Produkt mit Wasser gewaschen und aus Methylcyclohexan umkristallisiert.
Ausbeute: 182 g Phenylneopentylphosphonat; Fp. 109-111° C;
3. Pentaerythritdiphenyldiphosphat ($D_3$)
136 g Pentaerythrit wird über einen dosierbaren Pulvertrichter in 500 ml $POCl_3$ eingetragen und auf 100° C erhitzt. Im Laufe von 30 bis 45 Min. löst sich der Alkohol unter HCl-Entwicklung auf. Anschließend beginnt Pentaerythrit-diphosphorchloridat auszukristallisieren. Der Hauptteil des $POCl_3$ wird im Vakuum abdestilliert. Die verbleibenden Kristalle werden mit Methylenchlorid gewaschen. Das Esterchlorid (250 g) und 220 g Phenol werden zusammen mit 200 ml Triethylamin in 2 l Methylenchlorid am Rückfluß erhitzt. Das Methylenchlorid wird abdestilliert und der Rückstand mit einer Mischung aus Wasser und Methylenchlorid extrahiert. Die Methylenchloridlösung wird abgetrennt, getrocknet und eingedampft.
Ausbeute: 288 g = 70 %.
4. Handelsprodukt Antiblaze 19(R) von Mobil ($D_4$)
Zu Vergleichszwecken wurden eingesetzt:
1. Xylol/Formaldehyd-Harz (XFH)
Für die Durchführung von Vergleichsversuchen wurde ein sauerstoffarmes Xylol/Formaldehyd-Harz nach US-PS 4 082 728 mit einem Sauerstoffgehalt m 1 Gew.% aus Xylol und Paraformaldehyd in Gegenwart von konzentrierter $H_2SO_4$ hergestellt. Wie durch kernresonanzspektroskopische Untersuchungen nachgewiesen werden konnte, enthielt das Polymere ausschließlich Methylenbrücken und keine Dimethyletherbrücken ($-CH_2-O-CH_2$).
Analyse: 0,4 % 0;
Molgewicht (dampfdruckosmometrisch in Toluol): 1100;
2. Poly(ammoniumphosphat) (Exolith(R), Hoechst oder Phoschek(R) P/30, Monsanto) gemäß EP-PS 26 391;
3. Bis(2-hydroxyethyl)phosphat gemäß DE-OS 2 928 349;
4. Melaminphosphat gemäß EP-PS 69 500;
5. Dimelammoniumpentaerythritdiphosphat + Tripentaerythrit = Weston XP 1668 Versuchsprodukt

von Borg Warner gemäß GB-PS 2 028 822.

Die Erfindung wird nachstehend anhand von Beispielen und Vergleichsversuchen näher erläutert. Die in den Beispielen und Vergleichsversuchen genannten Teile und Prozente beziehen sich, sofern nicht anderes vermerkt ist, auf das Gewicht der jeweils betrachteten Gesamtmischung.

Beispiele 1 bis 14 und Vergleichsversuche 15 bis 38

Die in der Tabelle 2 angegebenen Mengen in Gew.% an Komponenten der erfindungsgemäßen Masse und gegebenenfalls weitere Zusätze wurden in einem Fluidmischer der Fa. Henschel, Kassel, bei 40 °C vermengt. Des Gemisch aus diesen Komponenten wurde dann mit den in der Tabelle 2 angegebenen Mengen an thermoplastischen oder schlagzäh modifizierten thermoplastischen Harzen auf einem Extruder bei 230 °C aufgeschmolzen, homogenisiert und anschließend granuliert.

Tabelle 2: Beispiele und Vergleichsversuche

| Beispiel Nr. | Komponenten A (Gew.%) | B (Gew.%) | C (Gew.%) | D (Gew.%) | B + C + D (Gew.%) | Einstufung nach UL 94 | Abtropfen nicht brennend | Abtropfen brennend |
|---|---|---|---|---|---|---|---|---|
| (erfindungsgemäß) | | | | | | | | |
| 1 | SAN-1 76 | $B_{11}$ 8 | $C_1$ 8 | $D_1$ 8 | 24 | V1 | nein | nein |
| 2 | SAN-1 73 | $B_{11}$ 9 | $C_1$ 9 | $D_1$ 9 | 27 | VO | nein | nein |
| 3 | SAN-2 76 | $B_{11}$ 8 | $C_1$ 8 | $D_1$ 8 | 24 | VO | nein | nein |
| 4 | SAN-3 76 | $B_{11}$ 8 | $C_1$ 8 | $D_1$ 8 | 24 | VO | nein | nein |
| 5 | SAN-3 65 | $B_{11}$ 15 | $C_1$ 10 | $D_4$ 10 | 35 | VO | nein | nein |
| 6 | ABS-20 77,5 | $B_{11}$ 7,5 | $C_1$ 7,5 | $D_1$ 7,5 | 22,5 | V1 | nein | nein |
| 7 | ABS-20 73 | $B_{11}$ 9 | $C_1$ 9 | $D_1$ 9 | 27 | VO | nein | nein |
| 8 | ABS-20 70 | $B_{11}$ 10 | $C_1$ 10 | $D_2$ 10 | 30 | V1 | nein | nein |
| 9 | ABS-20 72 | $B_{11}$ 10 | $C_1$ 9 | $D_3$ 9 | 28 | VO | nein | nein |
| 10 | ABS-20 72 | $B_{15}$ 10 | $C_1$ 9 | $D_1$ 9 | 28 | VO | nein | nein |

von Borg Warner gemäß GB-PS 2 028 822.

Die Erfindung wird nachstehend anhand von Beispielen und Vergleichsversuchen näher erläutert. Die in den Beispielen und Vergleichsversuchen genannten Teile und Prozente beziehen sich, sofern nicht anderes vermerkt ist, auf das Gewicht der jeweils betrachteten Gesamtmischung.

Beispiele 1 bis 14 und Vergleichsversuche 15 bis 38

Die in der Tabelle 2 angegebenen Mengen in Gew.% an Komponenten der erfindungsgemäßen Masse und gegebenenfalls weitere Zusätze wurden in einem Fluidmischer der Fa. Henschel, Kassel, bei 40 °C vermengt. Des Gemisch aus diesen Komponenten wurde dann mit den in der Tabelle 2 angegebenen Mengen an thermoplastischen oder schlagzäh modifizierten thermoplastischen Harzen auf einem Extruder bei 230 °C aufgeschmolzen, homogenisiert und anschließend granuliert.

Tabelle 2: Beispiele und Vergleichsversuche

| Beispiel Nr. | Komponenten A (Gew.%) | Komponenten B (Gew.%) | Komponenten C (Gew.%) | Komponenten D (Gew.%) | B + C + D (Gew.%) | Einstufung nach UL 94 | Abtropfen nicht brennend | Abtropfen brennend |
|---|---|---|---|---|---|---|---|---|
| (erfindungsgemäß) | | | | | | | | |
| 1 | SAN-1 76 | $B_{11}$ 8 | $C_1$ 8 | $D_1$ 8 | 24 | V1 | nein | nein |
| 2 | SAN-1 73 | $B_{11}$ 9 | $C_1$ 9 | $D_1$ 9 | 27 | VO | nein | nein |
| 3 | SAN-2 76 | $B_{11}$ 8 | $C_1$ 8 | $D_1$ 8 | 24 | VO | nein | nein |
| 4 | SAN-3 76 | $B_{11}$ 8 | $C_1$ 8 | $D_1$ 8 | 24 | VO | nein | nein |
| 5 | SAN-3 65 | $B_{11}$ 15 | $C_1$ 10 | $D_4$ 10 | 35 | VO | nein | nein |
| 6 | ABS-20 77,5 | $B_{11}$ 7,5 | $C_1$ 7,5 | $D_1$ 7,5 | 22,5 | V1 | nein | nein |
| 7 | ABS-20 73 | $B_{11}$ 9 | $C_1$ 9 | $D_1$ 9 | 27 | VO | nein | nein |
| 8 | ABS-20 70 | $B_{11}$ 10 | $C_1$ 10 | $D_2$ 10 | 30 | V1 | nein | nein |
| 9 | ABS-20 72 | $B_{11}$ 10 | $C_1$ 9 | $D_3$ 9 | 28 | VO | nein | nein |
| 10 | ABS-20 72 | $B_{15}$ 10 | $C_1$ 9 | $D_1$ 9 | 28 | VO | nein | nein |

Tabelle 2 Forts.

| Beispiel Nr. | Komponenten A (Gew.%) | B (Gew.%) | C (Gew.%) | D (Gew.%) | B + C + D (Gew.%) | Einstufung nach UL 94 | Abtropfen nicht brennend | Abtropfen brennend |
|---|---|---|---|---|---|---|---|---|
| 11 | ABS-20 70 | $B_{15}$ 10 | $C_1$ 10 | $D_2$ 10 | 30 | VO | nein | nein |
| 12 | ABS-45 72 | $B_{11}$ 9 | $C_1$ 10 | $D_1$ 9 | 28 | VO | nein | nein |
| 13 | ABS-45 71 | $B_{11}$ 10 | $C_1$ 9 | $D_3$ 10 | 29 | VO | nein | nein |
| 14 | ABS-45 68 | $B_{15}$ 12 | $C_1$ 10 | $D_1$ 10 | 32 | VO | nein | nein |
| Vergleichs-Versuche (nicht erfindungsgemäß) | | | | | | | | |
| 15 | SAN-1 60 | $B_{11}$ 40 | - | - | 40 | keine | ja | ja |
| 16 | SAN-1 60 | - | - | $D_1$ 40 | 40 | keine | nein | ja |
| 17 | ABS-20 50 | $B_{11}$ 50 | - | - | 50 | keine | nein | nein |

Tabelle 2 Forts.

| Beispiel Nr. | Komponenten A (Gew.%) | B (Gew.%) | C (Gew.%) | D (Gew.%) | B + C + D (Gew.%) | Einstufung nach UL 94 | Abtropfen nicht brennend | Abtropfen brennend |
|---|---|---|---|---|---|---|---|---|
| 18 | ABS-20<br>60 | – | $C_1$<br>40 | – | 40 | keine | ja | ja |
| 19 | ABS-20<br>60 | – | – | $D_1$<br>40 | 40 | keine | nein | ja |
| 20 | ABS-20<br>60 | $B_{11}$<br>20 | $C_1$<br>20 | – | 40 | keine | nein | nein |
| 21 | ABS-20<br>60 | $B_{11}$<br>20 | – | $D_1$<br>20 | 40 | keine | nein | ja |
| 22 | ABS-20<br>60 | – | $C_1$<br>20 | $D_1$<br>20 | 40 | keine | nein | ja |
| 23 | ABS-20<br>60 | – | – | $D_2$<br>40 | 40 | keine | ja | ja |
| 24 | ABS-45<br>55 | – | – | $D_4$<br>45 | 45 | keine | ja | ja |
| 25 | ABS-45<br>60 | – | $C_1$<br>16 | Bis(hydroxyethyl)phosphat<br>24 | 40 | keine | nein | nein |
| 26 | ABS-20<br>55 | $B_{11}$<br>10 | – | Melaminphosphat<br>35 | 45 | keine | nein | nein |

Tabelle 2 Forts.

| Beispiel Nr. | Komponenten A (Gew.%) | B (Gew.%) | C (Gew.%) | D (Gew.%) | B + C + D (Gew.%) | Einstufung nach UL 94 | Abtropfen nicht brennend | brennend |
|---|---|---|---|---|---|---|---|---|
| 27 | ABS-20 60 | $B_{11}$ 20 | - | Exolith 20 | 40 | keine | nein | nein |
| 28 | ABS-20 60 | $B_{11}$ 20 | $C_1$ 10 | Exolith 10 | 40 | keine | nein | nein |
| 29 | ABS-20 60 | $B_{11}$ 20 | $C_1$ 10 | Phoscheck P/30 10 | 40 | keine | nein | nein |
| 30 | ABS-20 60 | - | - | Weston XP 1668 40 | 40 | keine | nein | ja |
| 31 | ABS-45 60 | - | - | Weston XP 1668 40 | 40 | keine | nein | nein |
| 32 | ABS-20 70 | $B_{11}$ 10 | - | Weston XP 1668 20 | 30 | keine | nein | nein |
| 33 | SAN-3 60 | - | - | XFH 40 | 40 | keine | nein | ja |
| 34 | SAN-3 70 | $B_{11}$ 10 | $C_1$ 10 | XFH 10 | 30 | V2 | nein | ja |
| 35 | ABS-20 60 | - | - | XFH 40 | 40 | keine | nein | ja |

Tabelle 2 Forts.

| Beispiel Nr. | Komponenten A (Gew.%) | B (Gew.%) | C (Gew.%) | D (Gew.%) | B + C + D (Gew.%) | Einstufung nach UL 94 | Abtropfen nicht brennend | Abtropfen brennend |
|---|---|---|---|---|---|---|---|---|
| 36 | ABS-20 70 | $B_{11}$ 10 | $C_1$ 10 | XFH 10 | 30 | keine | nein | ja |
| 37 | ABS-45 60 | - | - | - | 40 | keine | nein | ja |
| 38 | ABS-45 70 | $B_{11}$ 10 | $C_1$ 10 | XFH 10 | 30 | keine | nein | ja |

## Ansprüche

1. Halogenfreie, flammgeschützte, thermoplastische Formmasse aus den Bestandteilen A, B, C und D, nämlich mindestens einem halogenfreien thermoplastischen Harz (A) aus der Gruppe, die umfaßt - ggf.

mit Kautschuk schlagzäh modifiziert - Polystyrol, Copolymerisate von Styrol mit Acrylnitril, Maleinsäureanhydrid, Maleinsäureestern oder Acrylestern, Copolymerisate von α-Methylstyrol mit Acrylnitril mit einem Anteil von 5 bis 95 Gew.% und weiter

1 bis 50 Gew.% mindestens eines Phenol/Aldehyd-Harzes (B),

1 bis 50 Gew.% mindestens einer Stickstoff enthaltenden organischen Verbindung (C) aus der Gruppe, die umfaßt Triazine, Triazolidine, Harnstoffe, Guanidine, Guanamine, Aminosäuren und Peptide sowie deren Salze und deren Derivate, und

3 bis 50 Gew.% mindestens einer Phosphor enthaltenden organischen Verbindung (D), ausgewählt aus der Gruppe, die umfaßt: Phenylneopentylphosphat, Pentaerythritdiphenyldiphosphat, Dicyclopentylhypodiphosphat, Ethylbrenzkatechinphosphat sowie die oligomeren Pentaerathritphosphite, -phosphate und -phosphonate der allgemeinen Formeln (III) (IV) und (V)

(III) 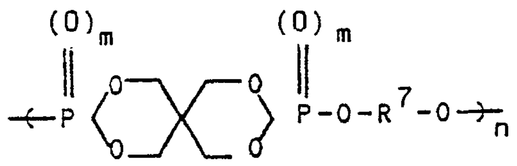 mit m = 0 oder 1

(IV) 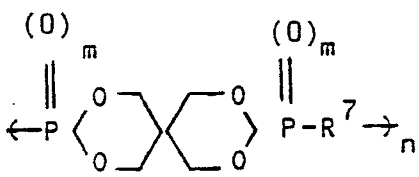 , mit m = 0 oder 1

(V) 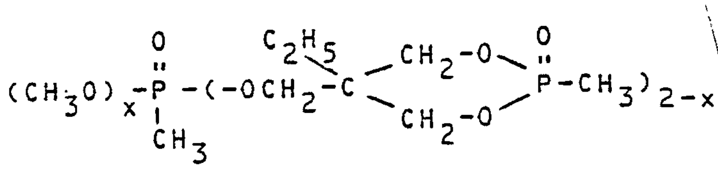

worin n eine ganze Zahl von 2 bis 500 und x 0 oder 1 sowie $R^7$ einen der zweiwertigen Reste

$-(CH_2)_2-$

$-(CH_2)_3-$

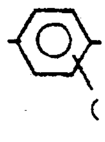 mit p = 0 bis 4,

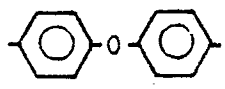

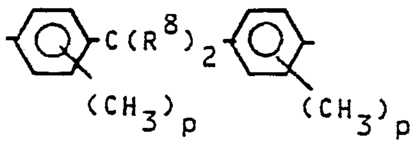 mit p = 0 bis 4 und $R^8$ = $C_1$- bis $C_4$-Alkyl oder H,

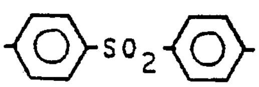

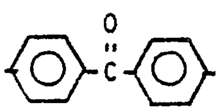

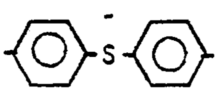

bedeuten, wobei sich die Gew.% auf die Gesamtmenge der Komponenten (A) bis (D) Beziehen.

2. Formmasse nach Anspruch 1, enthaltend mindestens 30 Gew.% des thermoplastischen Harzes (A), 5 bis 25 Gew.% des Phenol/Aldehyd-Harzes (B), 5 bis 35 Gew.% der Stickstoff enthaltenden organischen Verbindung (C), 5 bis 35 Gew.% der Phosphor enthaltenden organischen Verbindung (D).

3. Formmasse nach Anspruch 1, enthaltend als thermoplastisches Harz (A) ein Styrolhomo- oder -copolymerisat, das eine Elastomerkomponente mit einer Glastemperatur [Tg] von unter 0°C enthalten kann.

4. Formmasse nach Anspruch 1, enthaltend als Komponente (B) ein Phenol/Aldehyd-Harz aus ($b_1$) mindestens einem Aldehyd der allgemeinen Formel (I)

$R^1$-CHO (I)

worin $R^1$ = H, $C_1C_{10}$-Alkyl, Cycloalkyl oder $C_6$-$C_{12}$-Aryl- oder $\omega$-Aryl-$C_1$-$C_3$-Alkylresten, darstellen

und

($b_2$) mindestens einem Phenol der allgemeinen Formel (II)

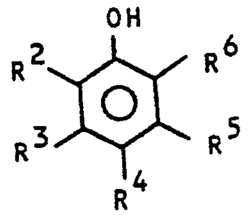

(II)

worin $R^2$ und $R^6$ Wasserstoffatome darstellen und $R^3$, $R^4$ und $R^5$ wahlweise Wasserstoff- oder $C_1$-$C_{20}$-Alkyl-Cycloalkyl-, $C_6$-$C_{10}$-Aryl-, $C_1$-$C_6$-Alkoxy-, Cycloalkoxi-, $C_6$-$C_{10}$-Phenoxi, Hydroxi-, Carbonyl-, Carboxi-, Cyano-, $C_1$-$C_6$-Alkylester-, $C_6$-$C_{10}$-Arylester-, Sulfonsäure-, Sulfonsäureamin-, $C_1$-$C_6$-Sulfonsäurealkylester-, $C_6$-$C_{10}$-Sulfonsäurearylester-, $C_1$-$C_6$-Alkyl- oder $C_6$-$C_{10}$-Arylphosphinsäure-und ihre $C_1$-$C_6$-Alkyl- oder $C_6$-$C_{10}$-Arylester, Phosphinsäure- und ihre Mono- und Di-$C_1$-$C_6$-Alkyl- oder -$C_6$-$C_{10}$-Arylester, O-Phosphorsäure- und ihre Mono- und Di-$C_1$-$C_6$-Alkyl- oder $C_6$-$C_{10}$-Arylester oder -Aryl-$C_1$-$C_6$-Alkyl-Reste sein können, oder worin $R^2$ und $R^4$ Wasserstoffatome darstellen und $R^3$, $R^5$ und $R^6$ die vorstehend genannte Bedeutung haben, darstellen können.

5. Formmasse nach Anspruch 4, dadurch gekennzeichnet, daß ein Phenol/Aldehyd-Harz (B) verwendet wird, das aus Formaldehyd und Phenol oder ein- oder mehrfachsubstituiertem Alkylphenol mit 2 bis 8 C-Atomen im Alkylrest oder deren Gemischen aufgebaut ist und ein Molgewicht (Zahlenmittel) im Bereich von 500 bis 2000 aufweist.

6. Formmasse nach Anspruch 1, enthaltend als ein Triazinderivat insbesondere Melamin.

7. Formmasse nach Anspruch 1, enthaltend als organische Phosphorverbindung ein cyclisches oder dicyclisches Phosphit, Phosphonsäureester, Phosphorsäure-, Hypophosphit- oder Hypodiphosphatester.

8. Verwendung der Formmasse nach Anspruch 1 zur Herstellung von Formteilen.

## Claims

1. A halogen-free flameproofed thermoplastic molding material consisting of the components A, B, C and D, ie. one or more halogen-free thermoplastic resins (A) from the group consisting of polystyrene, copolymers of styrene with acrylonitrile, maleic anhydride, maleic esters or acrylates and copolymers of $\alpha$-methylstyrene with acrylonitrile, which polymers may have been toughened with rubber, in an amount of from 5 to 95% by weight, and furthermore
from 1 to 50% by weight of one or more phenol/aldehyde resins (B),
from 1 to 50% by weight of one or more nitrogen-containing organic compounds (C) from the group consisting of triazines, triazolidines, ureas, guanidines, guanamines, amino acids and peptides and salts and derivatives thereof and
from 3 to 50% by weight of one or more phosphorus-containing organic compounds (D), selected from the group consisting of phenyl neopentyl phosphate, pentaerythritol diphenyl diphosphate, dicyclopentyl hypodiphosphate, ethylpyrocatechol phosphate and the oligomeric pentaerythritol phosphites, phosphates and phosphonates of the formulae (III), (IV) and (V)

(III) 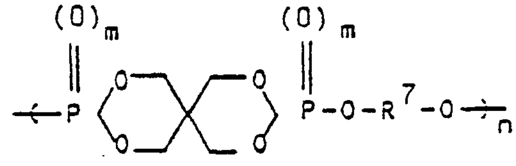 where m is 0 or 1

(IV) 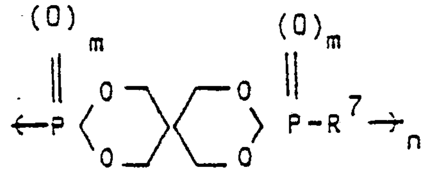 , where m is 0 or 1

(V) 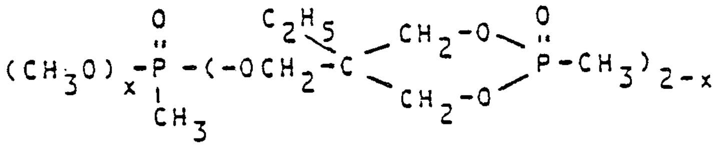

where n is an integer from 2 to 500 and x is 0 or 1 and $R^7$ is a divalent radical

$-(CH_2)_2-$

$-(CH_2)_3-$

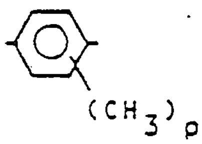 where p is 0 to 4,

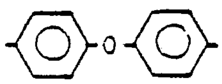

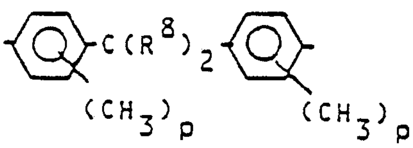 where p is from 0 to 4 and $R^8$ is $C_1$-$C_4$-alkyl or H,

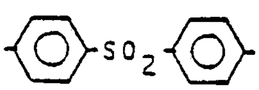

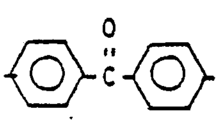

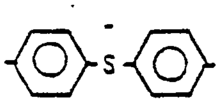

the percentage by weight being based on the total amount of components (A) to (D).

**2.** A molding material as claimed in claim 1, containing not less than 30% by weight of the thermoplastic resin (A),

from 5 to 25% by weight of the phenol/aldehyde resin (B), from 5 to 35% by weight of the nitrogen-containing organic compound (C) and
from 5 to 35% by weight of the phosphorus-containing organic compound (D).

**3.** A molding material as claimed in claim 1, containing, as the thermoplastic resin (A), a styrene homo- or copolymer which may contain an elastomer component having a glass transition temperature [Tg] of less than 0 °C.

**4.** A molding material as claimed in claim 1, containing, as component (B), a phenol/aldehyde resin consisting of
($b_1$) one or more aldehydes of the formula (I)

$R^1$-CHO (I)

where $R^1$ is H, $C_1$-$C_{10}$-alkyl, cycloalkyl, $C_6$-$C_{12}$-aryl or ω-aryl-$C_1$-$C_3$-alkyl, and
($b_2$) one or more phenols of the formula (II)

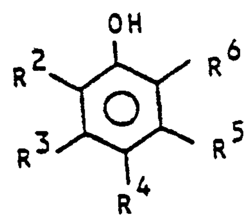

(II)

where $R^2$ and $R^6$ are each hydrogen, and $R^3$, $R^4$ and $R^5$ can each alternatively be hydrogen, $C_1$-$C_{20}$-alkyl, cycloalkyl, $C_6$-$C_{10}$-aryl, $C_1$-$C_6$-alkoxy, cycloalkoxy, $C_6$-$C_{10}$-phenoxy, hydroxyl, carbonyl, carboxyl, cyano, a $C_1$-$C_6$-alkyl ester radical, a $C_6$-$C_{10}$-aryl ester radical, sulfo, sulfonamido, a sulfonic acid $C_1$-$C_6$-alkyl ester radical, a sulfonic acid $C_6$-$C_{10}$-aryl ester radical, a $C_1$-$C_6$-alkyl- or $C_6$-$C_{10}$-arylphosphinic acid radical or its $C_1$-$C_6$-alkyl or $C_6$-$C_{10}$-aryl ester radical, a phosphonic acid radical or its mono- or di-$C_1$-$C_6$-alkyl or -$C_6$-$C_{10}$-aryl ester, an O-phosphoric acid radical or its mono- or di-$C_1$-$C_6$-alkyl or -$C_6$-$C_{10}$-aryl ester, or -aryl-$C_1$-$C_6$-alkyl, or $R^2$ and $R^4$ are each hydrogen, and $R^3$, $R^5$ and $R^6$ have the above meanings.

**5.** A molding material as claimed in claim 4, wherein the phenol/aldehyde resin (B) used consists of formaldehyde and phenol or a monosubstituted or polysubstituted alkylphenol where alkyl is of 2 to 8 carbon atoms, or a mixture of these, and has a number average molecular weight of from 500 to 2,000.

**6.** A molding material as claimed in claim 1, in which the triazine derivative is in particular melamine.

**7.** A molding material as claimed in claim 1, in which the organic phosphorus compound is a cyclic or dicyclic phosphite, a phosphonate, a phosphate, a hypophosphite or a hypodiphosphate.

**8.** Use of a molding material as claimed in claim 1 for the production of shaped articles.

**Revendications**

**1.** Matière à mouler thermoplastiques, ignifugées, exemptes d'halogènes, constituées des composants A, B, C et D, notamment au moins une résine thermoplastique, exempte d'halogènes (A) appartenant au groupe qui comprend le polystyrène - éventuellement modifiée à l'aide de caoutchouc pour le rendre résilient, les copolymères du styrène et de l'acrylonitrile, l'anhydride maléique, les esters de l'acide maléique ou les esters acryliques, les copolymères de l'α-méthylstyrène et de l'acrylonitrile, en une fraction de 5 à 95% en poids et, en outre,

1 à 50% en poids d'au moins une résine de phénol/aldéhyde (B),

1 à 50% en poids d'au moins un composé organique contenant de l'azote (C) appartenant au groupe

qui comprend les triazines, les triazolines, les urées, les guanidines, les guanamines, les aminoacides et les peptides, comme aussi leurs sels et leurs dérivés et

3 à 50% en poids d'au moins un composé organique contenant du phosphore (D), choisi dans le groupe qui comprend le phosphate de phénylnéopentyle, le diphosphate de pentaérythritediphényle, l'hypodiphosphate de dicyclopentyle, le phosphate d'éthylpyrocatéchine, comme aussi les phosphites, phosphates et phosphonates de pentaérythrite, oligomères, des formules générales (III), (IV) et (V)

(III) 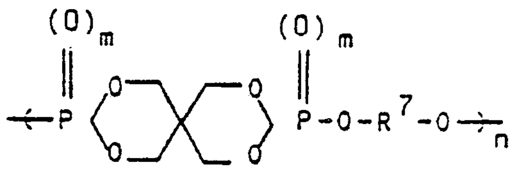 m = 0 ou 1

(IV) 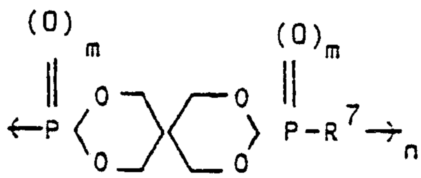 , m = 0 ou 1

(V) 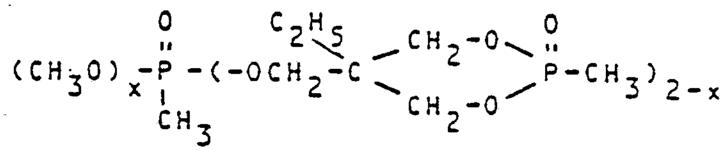

dans lesquelles n représente un nombre entier de 2 à 500 et x est égal à 0 ou à 1, R représente le groupe bivalent

$-(CH_2-)_2$

$-(CH_2-)_3$

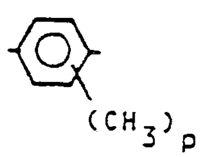 p = 0 à 4,

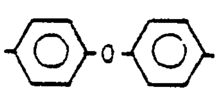

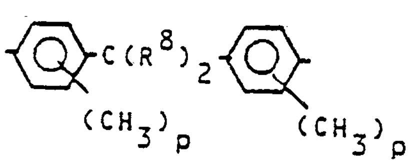 p = 0 à 4 et $R^8$ = alkyle en $C_1$ à $C_4$ ou H,

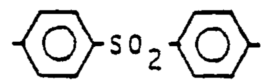

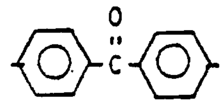

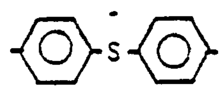

où les pourcents en poids se rapportent à la quantité totale des composants (A) à (D).

**2.** Matières à mouler suivant la revendication 1, caractérisées en ce qu'elles contiennent au moins

30% de la résine thermoplastique (A),

5 à 25% en poids de la résine de phénol/aldéhyde (B),

5 à 35% en poids du composé organique contenant de l'azote (C),

5 à 35% en poids du composé organique contenant du phosphore (D).

**3.** Matières à mouler suivant la revendication 1, caractérisées en ce qu'elles contiennent, à titre de résine thermoplastique (A), un homopolymère ou un copolymère du styrène, qui peut contenir un composant élastomère d'une température de transition vitreuse (Tg) inférieure à 0° C.

**4.** Matières à mouler suivant la revendication 1, caractérisées en ce qu'elles contiennent, à titre de composant (B), une résine de phénol/aldéhyde constituée de

($b_1$) au moins un aldéhyde de la formule (I)

$R^1$-CHO (1)

dans laquelle $R^1$ représente un atome d'hydrogène, un radical alkyle en $C_1$-$C_{10}$, cycloalkyle, ou aryl-($C_6$-$C_{12}$)-ou ω-aryl-alkyle($C_1$-$C_3$)

et

($b_2$) au moins un phénol de la formule (II)

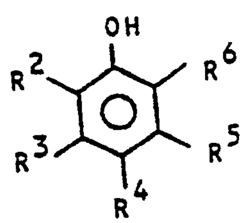

(II)

dans laquelle $R^2$ et $R^6$ représentent des atomes d'hydrogène et $R^3$, $R^4$ et $R^5$ représentent, au choix, des atomes d'hydrogène, ou des radicaux alkyl($C_1$-$C_{20}$)-cycloalkyle, aryle en $C_6$-$C_{10}$, alcoxy en $C_1$-$C_6$, cycloalcoxy, phénoxy en $C_6$-$C_{10}$, hydroxyle, carbonyle, carboxyle, cyano, ester alkylique en $C_1$-$C_6$, ester arylique en $C_6$-$C_{10}$, acide sulfonique, sulfonylamine, sulfonate d'alkyle en $C_1$-$C_6$, sulfonate d'aryle en $C_6$-$C_{10}$, acide alkyl($C_1$-$C_6$)- ou aryl($C_6$-$C_{10}$)-phosphinique et ses esters alkyliques en $C_1$-$C_6$ ou aryliques en $C_6$-$C_{10}$, acide phosphinique et ses esters dialkyliques en $C_1$-$C_6$ ou aryliques en $C_6$-$C_{10}$,

acide O-phosphorique et ses esters mono- et di-alkyliques en $C_1$-$C_6$ ou aryliques en $C_6$-$C_{10}$ ou aryl-alkyle($C_1$-$C_6$), ou bien $R^2$ et $R^4$ représentent des atomes d'hydrogène et $R^3$, $R^5$ et $R^6$ possèdent les significations qui leur ont été précédemment attribuées.

**5.** Matières à mouler suivant la revendication 4, caractérisées en ce que l'on utilise une résine de phénol/aldéhyde (B) constituée de formaldéhyde et de phénol, ou d'un alkylphénol mono- ou polysubstitué, dont le radical alkyle comporte de 2 à 8 atomes de carbone, ou de leurs mélanges et qui présente une masse moléculaire (moyenne en nombre) qui varie de 500 à 2000.

**6.** Matières à mouler suivant la revendication 1, caractérisées en ce qu'elles contiennent de la mélamine à titre de dérivé de la triazine.

**7.** Matières à mouler suivant la revendication 1, caractérisées en ce qu'elles contiennent, à titre de composé organique du phosphore, un phosphite cyclique ou dicyclique, des esters de l'acide phosphonique, les esters de l'acide phoshorique, des hypophosphites ou des hypodiphosphates.

**8.** Utilisation des matières à mouler suivant la revendication 1 pour la fabrication d'articles moulés.